# FASCICULE DE BREVET EUROPEEN

(11) **EP 3 384 197 B1**
(45) Date de publication et mention de la délivrance du brevet: **15.05.2019**
(21) Numéro de dépôt: 16815875.6
(22) Date de dépôt: 30.11.2016
(51) Int. Cl.: F16L 41/03

(54) **DISPOSITIF POUR RACCORDER ENTRE EUX DES TUBES TRÈS HAUTE PRESSION**
VORRICHTUNG ZUM VERBINDEN VON ZWEI RÖHREN MIT SEHR HOHEM DRUCK
DEVICE FOR CONNECTING TWO VERY HIGH PRESSURE TUBES

(30) Priorité: 01.12.2015 FR 1502500
(43) Date de publication de la demande: 10.10.2018
(73) Titulaire: Senior Flexonics Blois SAS, 41033 Blois (FR)
(72) Inventeur: MALLARD, Patrick, 41700 Cour-Cheverny (FR)
(74) Mandataire: Loyer & Abello
(86) Numéro de dépôt international: PCT/FR2016/000196
(87) Numéro de publication internationale: WO 2017/093620

(56) Documents cités:
- GB-A- 939 412
- NL-A- 7 304 662
- US-A- 3 739 804
- US-A1- 2006 038 399

## Description

La présente invention est relative à un dispositif pour raccorder entre eux des tubes très haute pression.

Par très haute pression il doit être compris des pressions comprises entre 5.000 et 15.000 bars soit entre 5.10⁸Pa et 15.10⁸Pa.

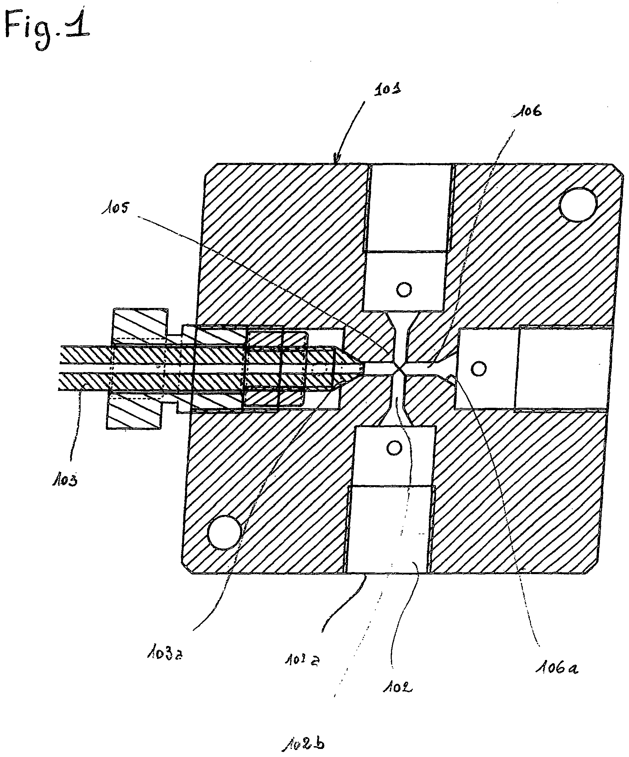

Actuellement le raccordement entre des tubes très haute pression est généralement réalisé par une nourrice permettant d'avoir une entrée et plusieurs sorties. Les tubes sont connectés à la nourrice au moyen d'une liaison filetée et un système d'étanchéité cône-cône. Un tel dispositif est représenté en coupe sur la figure 1. Il comprend un mono-corps 101 comportant, d'une part, quatre cavités 102 de forme générale tubulaire, dont une extrémité 102a débouche vers l'extérieur, d'un diamètre supérieur à celui du tube à raccorder 103 et dont l'autre extrémité 102b est munie d'un orifice central 104. Ce mono-corps 101 comporte une partie centrale 105 comportant deux canaux 106 sensiblement de même diamètre que le diamètre intérieur des tubes à raccorder 103, se croisant et dont l'extrémité débouchant dans une cavité tubulaire 102 forme un cône femelle 106a pour recevoir l'extrémité libre du tube à raccorder 103 : cette extrémité libre constitue un cône mâle 103a. En général, les cônes femelles ont un angle d'environ 60° et les cônes mâles d'environ 59°.

Ces dispositifs connus présentent comme inconvénient principal un défaut d'étanchéité pour des pressions égales ou supérieures à 5.10⁸Pa, sauf à générer des efforts de serrage très importants entre les deux surfaces coniques du corps et du tube : ces efforts de serrage entraînant des efforts radiaux et tangentiels au niveau des liaisons cône-cône produisent des contraintes qui conduisent à une concentration de contraintes pouvant rapidement dépasser la limite en fatigue du matériau dont est fait le mono-corps 101.

Le document US 2006/038399-A est relatif à un raccordement tel que décrit ci-dessus mais comprenant un perçage central et une noix cylindrique, avec un serrage effectué dans l'axe longitudinal du noyau cylindrique : ceci génère un effort axial de compression sur la noix centrale. Document NL7304662 est aussi relatif à un raccordement tel que décrit ci-dessus.

Aussi un des buts de la présente invention est-il de fournir un dispositif pour raccorder entre eux des tubes très haute pression qui permet d'obvier les inconvénients ci-dessus.

Un autre but de la présente invention est de fournir un dispositif de ce type dont la réalisation reste économiquement intéressante.

Ces buts, ainsi que d'autres qui apparaîtront par la suite, sont atteints par un dispositif pour raccorder entre eux des tubes très haute pression comprenant un corps comportant au moins deux cavités tubulaires dont le diamètre intérieur est supérieur au diamètre extérieur des tubes à raccorder, débouchant à une extrémité à l'extérieur du corps, et dont l'autre extrémité est munie d'un orifice central, caractérisé par le fait que le corps est muni d'un perçage central dans lequel débouchent les orifices centraux, que ce dispositif comprend aussi une noix coopérant intimement avec le perçage central et comprenant au moins un canal mettant en relation deux orifices centraux, et que ce dispositif comprend des moyens de serrage pour la mise en compression de la noix avec le corps, le perçage central et la noix sont des troncs de cône dont le demi-angle sommet est compris entre 85° et 65°.

De préférence, les cavités tubulaires sont au nombre de quatre et diamétralement opposées, les canaux étant au nombre de deux et se croisant sensiblement à angle droit.

De préférence, les extrémités des canaux sont de forme conique et possèdent une zone plane pour réaliser une étanchéité avec l'extrémité du tube correspondant.

Avantageusement, une rainure est réalisée entre la noix et le corps afin de recevoir une goupille ayant une fonction d'anti-rotation.

De préférence, la noix est en un matériau dont le module de Young est supérieur à celui de l'acier, comme par exemple un carbure de tungstène.

Avantageusement, les moyens de serrage pour la mise en compression de la noix avec le corps sont constitués par un couvercle disposé sur la face du corps par laquelle est introduite la noix dans le perçage central et par des vis de serrage pénétrant dans ledit corps.

La description qui va suivre et qui ne présente aucun caractère limitatif, doit être lue en regard des figures annexées, parmi lesquelles :
- la figure 1 est une vue en coupe d'un dispositif pour raccorder des tuyaux haute pression selon l'art antérieur,
- la figure 2 est une vue de face d'un dispositif pour raccorder des tuyaux très haute pression selon la présente invention ;
- la figure 3 est une vue en coupe du dispositif selon le plan A-A de la figure 2;
- la figure 4 est une vue en coupe selon le plan B-B de la figure 3 ; et,
- la figure 5 est une vue du détail C de la figure 4.

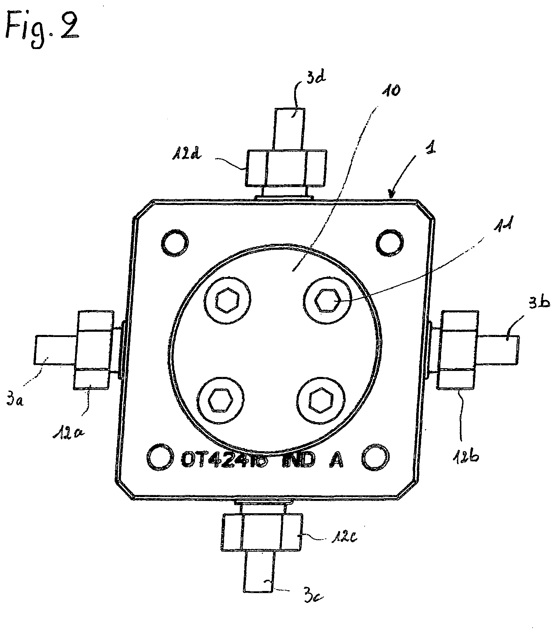

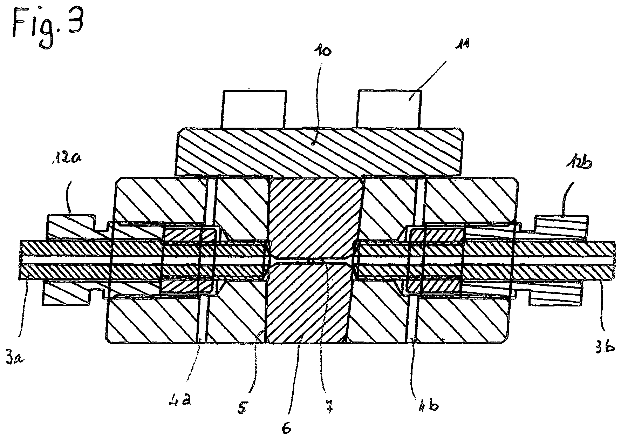

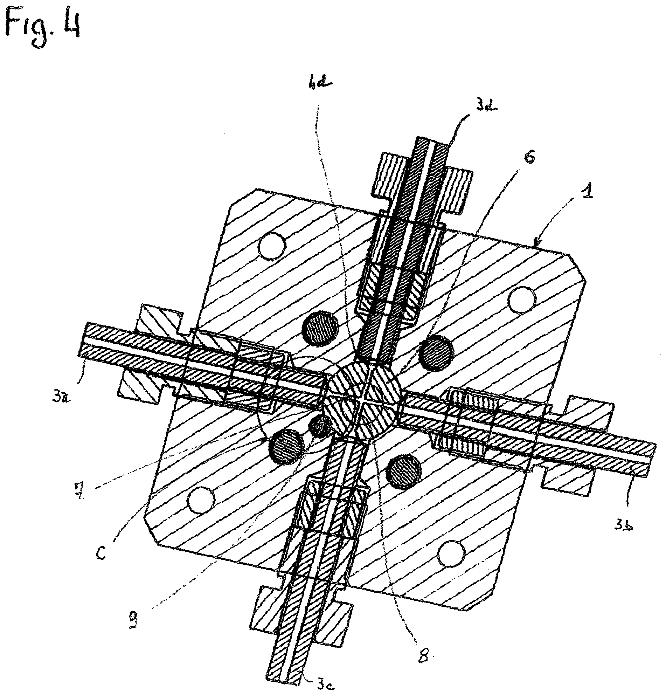

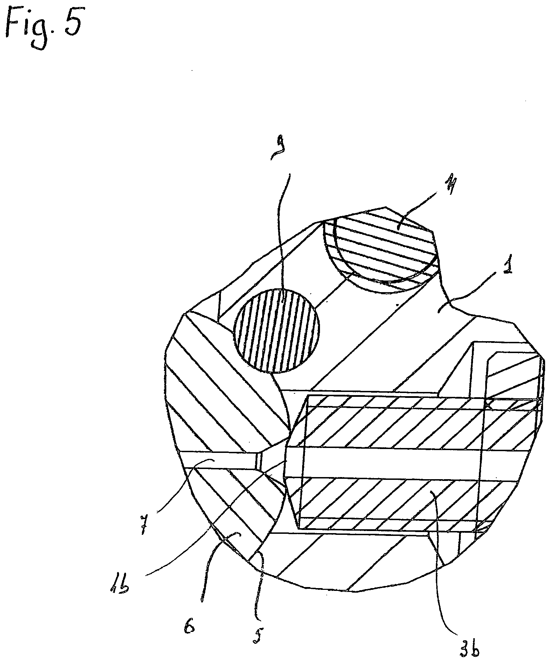

Ainsi qu'on peut le voir sur les figures 2 à 5, un dispositif pour raccorder entre elles des canalisations très haute pression comprend un corps 1 comportant au moins deux cavités tubulaires 2a et 2b diamétralement opposées. Ce corps 1 est de forme générale parallélépipédique selon le présent exemple de réalisation.

Le diamètre intérieur de chaque cavité tubulaire 2a, 2b est au moins égal au diamètre extérieur du tube, respectivement 3a et 3b, à raccorder. Chaque cavité tubulaire 2a, 2b débouche à une extrémité à l'extérieur du corps 1, l'autre extrémité étant munie d'un orifice central 4a, 4b respectivement.

Selon la présente invention, le corps 1 est muni dans sa hauteur d'un perçage central 5 dans lequel débouchent les orifices centraux 4a, 4b : l'axe de ce perçage central 5 est perpendiculaire à celui des cavités tubulaires 2a et 2b. De plus, le dispositif comprend aussi une noix 6 coopérant intimement avec le perçage central 5 et comprenant au moins un canal 7 mettant en relation les deux orifices centraux 4a, 4b.

Le perçage central et la noix sont des troncs de cône dont le demi-angle sommet est compris entre 85° et 65°. De ce fait la noix 6 ne peut être introduite dans le perçage central que par une face du corps 1, en l'occurrence la face 1a.

Selon le présent exemple de réalisation illustré par les figures 2 à 5, le dispositif selon l'invention comprend quatre cavités tubulaires 2a, 2b, 2c et 2d disposées sensiblement en croix et la noix 6 comporte deux canaux perpendiculaires 7 et 8 dont les extrémités en regard des orifices centraux 4a 4b, 4c et 4d sont coniques pour coopérer avec les extrémités des tubes 3a, 3b, 3c et 3d qui dépassent de ces orifices centraux.

Les extrémités de ces tubes sont elles-mêmes coniques : l'angle au sommet est compris entre 100° et 150°. Ceci permet d'avoir un contact linéique entre chaque tube et la noix : ce contact va générer des efforts de compression axiale dans la noix 6 et réduire considérablement les efforts radiaux et tangentiels.

Afin d'assurer un positionnement correct des canaux par rapport aux cavités tubulaires, une rainure est réalisée entre la noix 6 et le corps 1 afin de recevoir une goupille 9 ayant une fonction d'anti-rotation.

La liaison conique entre la noix 6 et le corps 1 est mise en compression par les moyens de serrage constitués par un couvercle 10 et par des vis de serrage 11 pénétrant dans le corps ou d'une quelconque liaison filetée. Le couvercle 10 est posé sur la face 1a du corps 1 par laquelle la noix 6 est introduite dans le perçage central 5. L'effort généré par le couvercle 10 comprime la noix 6 sur la surface conique du perçage central 5 et crée donc ainsi des contraintes de compression radiales et tangentielles sur la noix 6. Ces contraintes tangentielles vont s'opposer aux contraintes tangentielles positives créées par le niveau de pression très élevé (plus de 10⁸ Pa) et protéger la noix 6 contre l'apparition de fissures de fatigue. Pour raccorder des tubes haute pression 3a, 3b, 3c et 3d, on introduit ceux-ci dans les cavités tubulaires 4a, 4b, 4c et 4d respectivement ménagées dans un corps 1 : ils sont maintenus en place par des moyens de calage connus 12a, 12b, 12c et 12d respectivement. De ce fait, l'axe de chaque tube est sensiblement confondu avec celui du canal correspondant de la noix 6.

Comme décrit ci-dessus, l'extrémité de chaque tube est de forme conique de façon à venir en butée dans l'extrémité conique du canal correspondant.

La noix 6 est réalisée en un matériau dont le module de Young est supérieur à celui de l'acier, comme par exemple un carbure de tungstène.

## Revendications

1. Dispositif pour raccorder entre eux des tubes très haute pression comprenant un corps (1) comportant au moins deux cavités tubulaires (2a 2b) dont le diamètre intérieur est supérieur au diamètre extérieur des tubes (3a, 3b) à raccorder, débouchant à une extrémité à l'extérieur du corps, et dont l'autre extrémité est munie d'un orifice central (4a, 4b), ledit corps (1) étant muni d'un perçage central (5) dans lequel débouchent lesdits orifices centraux (4a, 4b), ledit dispositif comprenant aussi une noix (6) coopérant intimement avec ledit perçage central (5) et comprenant au moins un canal mettant en relation deux orifices centraux et ledit dispositif comprenant des moyens de serrage pour la mise en compression de ladite noix (6) avec ledit corps (1), ledit perçage central (5) et ladite noix (6) étant des troncs de cône dont le demi-angle au sommet est compris entre 85° et 65°, **caractérisé en ce que** le tronc de cône dudit perçage central (5) et le tronc de cône de ladite noix (6) sont mis en compression l'un contre l'autre par lesdits moyens de serrage de telle sorte que des contraintes de compression radiales et tangentielles sont créées sur ladite noix (6).

2. Dispositif selon la revendication 1, **caractérisé par le fait que** les cavités tubulaires sont au nombre de quatre et diamétralement opposées, les canaux étant au nombre de deux et se croisant sensiblement à angle droit.

3. Dispositif selon la revendication 1, **caractérisé par le fait que** les extrémités des canaux (7, 8) sont de forme conique et possèdent une zone plane pour réaliser une étanchéité avec l'extrémité du tube correspondant.

4. Dispositif selon la revendication 1, **caractérisé par le fait qu'**une rainure est réalisée entre la noix (6) et le corps (1) afin de recevoir une goupille (9) ayant une fonction d'anti-rotation.

5. Dispositif selon la revendication 1, **caractérisé par le fait que** la noix (6) est en un matériau dont le module de Young est supérieur à celui de l'acier.

6. Dispositif selon la revendication 6, **caractérisé par le fait que** la noix (6) est en un carbure de tungstène.

7. Dispositif selon l'une quelconque des revendications 1 à 6, **caractérisé par le fait que** les moyens de serrage pour la mise en compression de ladite noix (6) avec ledit corps (1) sont constitués par un couvercle (10) disposé sur la face (1a) du corps (1) par laquelle est introduite la noix (6) dans le perçage central (5) et par des vis de serrage (11) pénétrant dans ledit corps (1).

## Patentansprüche

1. Vorrichtung zum Verbinden von Rohren mit sehr hohem Druck miteinander, umfassend einen Körper (1) mit zumindest zwei rohrförmigen Hohlräumen (2a, 2b), deren jeweiliger Innendurchmesser größer als ein Außendurchmesser der zu verbindenden Rohre (3a, 3b) ist, die an einem Ende innerhalb des Körpers (1) münden, und deren jeweiliges andere Ende eine zentrale Öffnung (4a, 4b) umfasst, wobei
der Körper (1) eine zentrale Bohrung (5) umfasst, in der die zentralen Öffnungen (4a, 4b) münden,
die Vorrichtung ferner einen Stöpsel (6) umfasst, der eng mit der zentralen Bohrung (5) zusammenarbeitet und mindestens einen Kanal aufweist, der zwei zentrale Öffnungen verbindet,
die Vorrichtung Spannmittel zum Zusammendrücken des Stöpsels (6) mit dem Körper (1) aufweist, und
die zentrale Bohrung (5) und der Stöpsel (6) Kegelstümpfe sind, deren halber Winkel an der Spitze zwischen 85° und 65° liegt, **dadurch gekennzeichnet, dass**
der Kegelstupf der zentralen Bohrung (5) und der Kegelstumpf des Stöpsels (6) durch die Spannmittel derart zusammengedrückt werden, dass radiale und tangentiale Belastungen auf dem Stöpsel (6) entstehen.

2. Vorrichtung nach Anspruch 1, **gekennzeichnet durch** vier rohrförmige Hohlräume, die diametral gegenüberliegend angeordnet sind, wobei die Kanäle zwei sind und sich im Wesentlichen rechtwinklig schneiden.

3. Vorrichtung nach Anspruch 1, **dadurch gekennzeichnet, dass** die Enden der Kanäle (7, 8) konisch sind und einen ebenen Bereich zum Abdichten mit dem Ende des entsprechenden Rohrs aufweisen.

4. Vorrichtung nach Anspruch 1, **dadurch gekennzeichnet, dass** zwischen dem Stöpsel (6) und dem Körper (1) eine Nut ausgebildet ist, um einen zur Drehverhinderung dienenden Stift (9) aufzunehmen.

5. Vorrichtung nach Anspruch 1, **dadurch gekennzeichnet, dass** der Stöpsel (6) aus einem Material besteht, dessen Elastizitätsmodul größer als das von Stahl ist.

6. Vorrichtung nach Anspruch 6, **dadurch gekennzeichnet, dass** der Stöpsel (6) aus einem Wolframkarbid gebildet ist.

7. Vorrichtung nach einem der Ansprüche 1 bis 6, **dadurch gekennzeichnet, dass** die Spannmittel zum Zusammendrücken des Stöpsels (6) mit dem Körper (1) durch eine Abdeckung (10), die auf der Fläche (1a) des Körpers (1), durch den der Stöpsel (6) in die zentrale Bohrung (5) eingeführt wird, und durch Spannschrauben (11), die in den Körper (1) eindringen, gebildet sind.

## Claims

1. Device for connecting two very high pressure tubes including a body (1) comprising at least two tubular cavities (2a, 2b), the inner diameter of which is greater than the outer diameter of the tubes (3a, 3b) to be connected, leading to an end outside the body, the other end of which has a central opening (4a, 4b); said body (1) having a central bore (5) into which said central openings (4a, 4b) lead; the aforementioned device also comprising a nut (6) closely cooperating with said central bore (5) and comprising at least one channel connecting two central openings and said device comprising clamping means for the compression of said nut (6) with said body (1), said central bore (5) and said nut (6) being truncated cones whose half cone angle is between 85° and 65°, **characterized in that** the truncated cone of said central bore (5) and the truncated cone of said nut (6) are compressed against each other by said clamping means so that radial and tangential compressive stresses are created on said nut (6).

2. Device according to claim 1, **characterized in that** the tubular cavities are four in number and diametrically opposed, the channels being two in number and intersecting substantially at right angles.

3. Device according to claim 1, **characterized in that** the ends of the channels (7, 8) are conically shaped and have a flat area to provide a seal with the end of the corresponding tube.

4. Device according to claim 1, **characterized in that** a groove is formed between the nut (6) and the body (1) for receiving a pin (9) having an anti-rotation function.

5. Device according to claim 1, **characterized in that** the nut (6) is made of a material whose Young's modulus is greater than that of steel.

6. Device according to claim 6, **characterized in that** the nut (6) is made of a tungsten carbide material.

7. Device according to any one of claims 1 to 6, **characterized in that** the clamping means for the compression of said nut (6) with said body (1) are constituted by a cover (10) positioned on the face (1a) of the body (1) through which the nut (6) is inserted in the central bore (5) and by clamping screws (11) entering said body (1).
